# EUROPEAN PATENT APPLICATION

(11) **EP 1 918 812 A1**
(43) Date of publication of application: **07.05.2008**
(21) Application number: 07119436.9
(22) Date of filing: 26.10.2007
(51) Int. Cl.: G06F 9/44

(54) **A software development system**

(30) Priority: 01.11.2006 IN CH20102006
(71) Applicant: Hewlett-Packard Development Company, L.P., Houston, TX 77070 (US)
(72) Inventor: Nanjundaiah, Mahesha, Bangalore, Karnataka 560048 (IN); Mannarswamy, Sandya Srivilliputtur, Bangalore, Karnataka 560048 (IN); Doval, Shruti, Bangalore, Karnataka 560048 (IN); Sandanagobalane, Hariharan, Lansdown Road, Bath, BA1 5ER (GB)
(74) Representative: Flutter, Paula

(57) **Abstract**

A method and system for developing a software tool. The method comprises capturing analysis information generated by at least one software product and required for or useful in developing the software tool, forwarding the analysis information from the software product to a database, storing the analysis information in the database, querying the database for at least a portion of the analysis information, receiving the portion of the analysis information from the database in response to the querying, and developing the software tool with or by reference to the portion of the analysis information.

## Description

### Background of the Invention

Various software products, during their execution, perform analyses and generate (and in some cases output) analysis information. For example, compilers - during compilation of a program - analyze the program and store extensive information knowledge about the program. This information is essential for the compiler to produce correct object code. A part of this information is retained in the generated object files as symbol table information to be used by the linker and/or debugger, but most of it is discarded after the compilation has been completed. Program analysis tools play an important role in development, deployment and maintenance of software applications. The analysis tools of the background art can be grouped into three broad categories:
1. Static source code analysis tools which require only the source code:
   a) Cross-referencing tools, such as CSCOPE;
   b) Program structure discovery tools, such as tools for constructing a class diagram generator;
   c) Program verification tools, such as lint;
   d) Source code browsers.
2. Runtime analysis tools that work on a combination of source code and the runtime information obtained by running an instrumented executable (some of which may not require source code to be present):
   a) Code coverage tools that measure how well the test cases exercise the application code;
   b) Test prioritization tools that determine which test cases are important to run for covering the parts of the code that have changed;
   c) Performance analyzers;
   d) Runtime verification tools, such as heap analysis tools and thread analysis tools
      synchronization analysis tools like lock lint
3. Tools that use advanced compiler features:
   a) incremental compilation;
   b) minimal compilation;
   c) refactoring.
   It appears, however, that most static source code analysis tools differ only in the way in which they traverse the abstract syntax tree. They reuse an existing front end and define a scripting language for specifying the kind of analysis that needs to be done on the abstract syntax tree. To some extent this can also be said of other analysis tools. Most of the aforementioned tools parse the source code and obtain an abstract syntax tree; they will then analyze the abstract syntax tree and, if needed, insert instrumentation code.

Much of the useful information needed by various analysis tools is available to the compiler during compilation. Some examples of such information are
1. Variable definition and usage information needed by the various discovery tools, such as CSCOPE;
2. Class hierarchy information needed by reverse engineering tools;
3. Dominator information used by code coverage tools to decide instrumentation points;
4. Machine resource utilization information used by performance analysis tools.

Information such as variable definition and usage information can be obtained by performing syntax analysis of the source code. However, others - such as dominator and class hierarchy information - need more complex analyses of the source. This information is available to the compiler, particularly when compiling at higher levels of optimization, but not otherwise.

It is possible to provide ease of tool development by exposing the compiler interfaces/source code itself, so that various tool developers can modify the compiler front end/optimizer/ backend, such as to remorph it as an analysis tool. GCC has been a successful framework for tool development for this reason, and some complex tools, such as racer X and mpatrol, are based on GCC. However this option is not viable in many commercial compilers where the source code cannot be made open source.

### Brief Description of the Drawing

In order that the invention may be more clearly ascertained, embodiments will now be described, by way of example, with reference to the accompanying drawing, in which:
FIG. 1 is a schematic view of a software development system according to an embodiment of the present invention.
FIG. 2 is a schematic view of the software development infrastructure according to an embodiment of the present invention of the software development system of FIG. 1, shown with a compiler and examples of software tools.
FIG. 3 is a schematic view of portions of the software development infrastructure of FIG. 2, shown with a compiler and indicating the information transmitted from different components of the compiler to the database of the software development infrastructure.
FIG. 4 is a flow diagram of a method of developing a software tool according to an embodiment of the present invention.

### Detailed Description of the Embodiments

There will be described a method of developing a software tool.

In one described embodiment, the method comprises capturing analysis information generated by at least one software product and required for or useful in developing the software tool, forwarding the analysis information from the software product to a database, storing the analysis information in the database, querying the database for at least a portion of the analysis information, receiving the portion of the analysis information from the database in response to the querying, and developing the software tool with or by reference to the portion of the analysis information.

There will also be described a software development infrastructure product and a software development system.

It will be understood by those in the art that developing software includes creating software and creating individual software components or tools, and enhancing such software and software components.

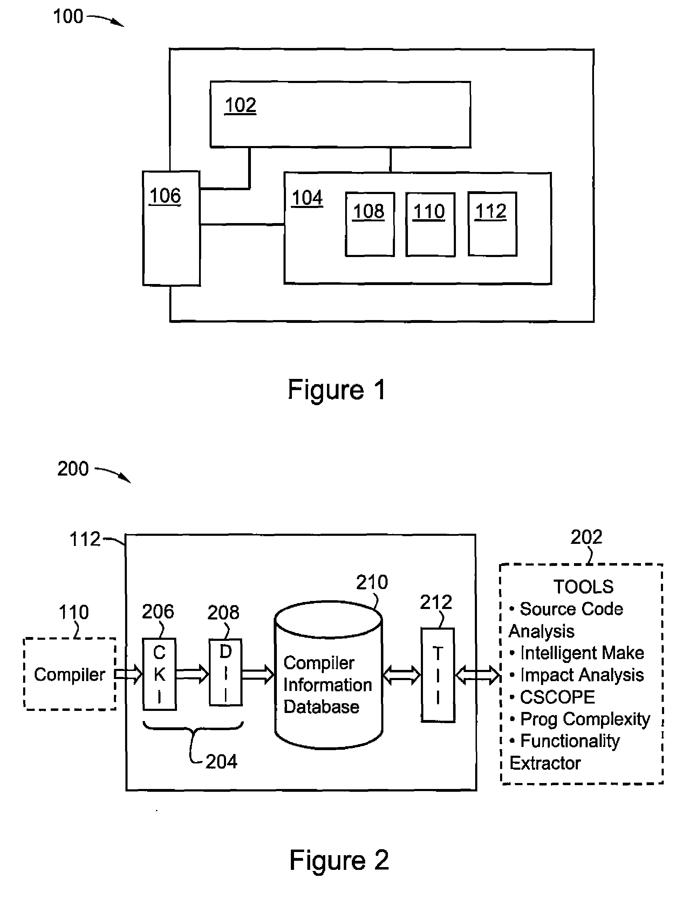

A software development system according to an embodiment of the present invention is shown schematically at 100 in FIG. 1. System 100 includes a processor 102, a memory 104 and an I/O device 106. Memory 104 (which comprises RAM, ROM and a hard-disk drive) includes an operating system 108, a compiler 110 and a software development infrastructure product in the form of software development infrastructure 112, all having executable components that can be executed by processor 102. Software development infrastructure 112 is adapted to control system 100 to perform the functions described below.

FIG. 2 is a schematic view 200 of software development infrastructure 112 with compiler 110 (from which it obtains certain information, as described below) and tools 202. The tools 202 are examples of tools that can be constructed with software development infrastructure 112. Software development infrastructure 112 has three major components. The first comprises Compiler Information Interfaces (CII) 204, which are implemented in two layers: Compiler Knowledge Interfaces (CKI) 206 and Database Information Interfaces (DII) 208. (It should be noted that CII 204 and TII 212 could be provided in the form of a single, bidirectional interface.)

Software development infrastructure 112 also includes a Compiler Internal Information Database (CIDB) 210, which comprises analysis information in the form of compilation information generated by compiler 110 (during the compilation of a software application by compiler 110) and transmitted to CIDB 110 by CII 204. The CII 204 define the flow of information from the compiler 110 to the CIDB 210.

Software development infrastructure 112 also includes Tools Information Interfaces (TII) 212, which are standard querying interfaces that define the information flow from the CIDB 210 to tools 202; TII 212 thus allow tool programmers to retrieve particular compilation information from the CIDB 210 for use in tool creation.

### Compiler Information Interfaces (CII) 204

These interfaces define how the information flows from the compiler 110 to the CIDB 210, and are implemented as two layers, CKI 206 and DII 208. CKI 206 capture the information generated by the compiler 110 as part of the compilation process. Some customisation of the compiler 110 would typically be required to cooperate with CKI 206. Thus, CKI 206 are adapted to receive the information generated and captured by compiler 110 during the compilation process in a predefined format. (Consequently, therefore, CKI 206 could be implemented at least in part within compiler 110.)

DII 208 receive the information provided by compiler 110 via CKI 206. DII 208 process that information into a compact form to be inserted into CIDB 210.

This two layered approach allows the information outputted by the compiler 110 to be independent of the database (CIDB 210) into which it is to be inserted. CKI 206 and DII 208 define an interface for information transfer between the compiler and the CIDB 210; as long as compiler 110 uses the CKI 206 to output the information in the predefined format, compiler 110 can be used with any implementation of software development infrastructure 112. Also, additional interfaces can be added to the CKI 206, including by the manufacturer of compiler 110, to extend CKI 206; a corresponding implementation of DII 208 would also be required.

### Compiler Information Database (CIDB) 210

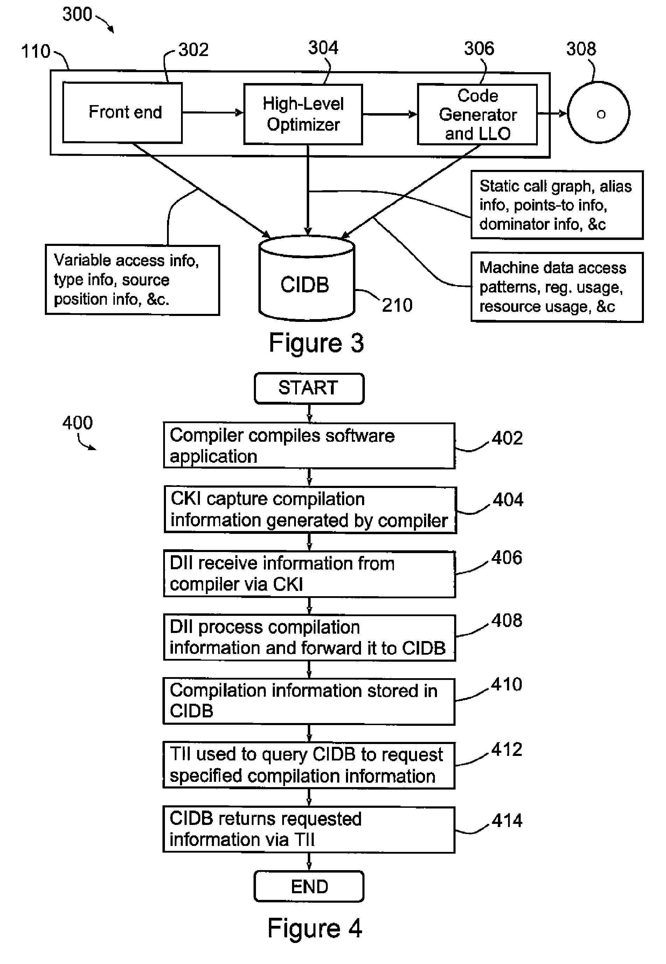

CIDB 210 houses different types of information; these may be classified according to the phase of compilation in which they are generated and collected, as is depicted in FIG. 3. FIG. 3 depicts schematically at 300 the different components of the compiler 110 (i.e. front-end 302, high-level optimizer 304, and code generator and low-level optimizer (LLO) 306), leading to the creation of the object code 208, and their contribution to CIDB 210. (CKI 206 and DII 208 have been omitted for simplicity.)

The compiler front-end 302 generates high level information, including symbol table information, source dependency information, and source position information, as part of the front-end's syntax and semantic analysis phase. Such high level information is typically required by source code analysis tools.

The compiler high-level optimizer 304 generates intermediate level information when the compiler operates on the high level intermediate representation of the source code, and is obtained as part of the analysis phases of the high-level optimizer 304. The intermediate level information typically includes control flow information, static call graph, dominator information, alias information, type information, array access information, and local points to information. If the compiler 110 also performs inter-procedural analysis, the inter-procedural analysis information - such as inter-procedural points to, and side effects analysis results - are also retained at this point. In addition to storing the results of various analyses, software development infrastructure 112 also stores the IR representation of the application source.

The compiler code generator and LLO 306 generate low level information, which is the architecture dependent information that is generated during the low level optimization phase of the compiler. This includes information such as the types of machine resources required by the application, its data access pattern, and register usage.

CIDB 210 maintains all the above-described information in a set of Tables. These include a Node Table, an Edge Table, a Class Table, a File Table, a Variable Table and a Mem-func Table.

Software development infrastructure 112 tracks any changes in the application sources (by any suitable technique of the background art), so that CIDB 210 can be updated incrementally. This also provides a mechanism to verify whether the current information in CIDB 210 is synchronized with the sources. CIDB 210 also computes digital signatures to detect changes in source code. Optionally, CIDB 210 may have a design along the lines of "Source Code Algebra", wherein an algebraic framework is employed to represent both structural and flow information in a single data model.

It should be noted that, although system 100 includes a compiler 110 and CIDB 210 is adapted for storing compilation information, in some embodiments a different software product (from a compiler) is used in a similar manner to output analysis information. In such cases, a database is provided for that analysis information instead of CIDB 210, though operating in essentially the same manner. Indeed, in some embodiments, the database is adapted to receive the analysis information generated by more than one such software products (and pertinent to the development of one or more software tools); a compiler may be one of these software products and the analysis information then includes compilation information. For example, various software tools could store the results of their analyses into the database for further utilization by other tools. Further, the analysis information may comprise runtime profile information for a software application, and that information can be generated by the software application itself or by another software application.

### Tools Information Interfaces (TII) 212

TII 212 define the flow of information between the database and the tools 202, and are used by a tool developer to retrieve desired compilation information from CIDB 210. The desired compilation information will be a specified portion of the compilation information stored in CIDB 210 (though in some cases the specified portion may comprise all the compilation information). TII 212 can provide that information in a variety of formats, including as text, graphs, and sets. Software development infrastructure 112 also provides multiple visitor patterns that can be used by tool developers to traverse the information and process it in a manner required by the tool.

TII 212 may be very simple; for example, one interface might be arranged for "providing all functions that use read system call". A more complex example is "dominator tree". In each case, however, the interfaces are adapted to the requirements of the tool. It is also possible for the tool developer to develop his own interface for TII 212, using the existing TII 212. TII 212 of this embodiment include the following interfaces.

### "Get caller list":

For a specified function, this interface returns a list of functions that call the specified function. This is extracted from the High Level Information generated by the compiler and stored in CIDB 210.

### "Get dominator tree":

This interface returns dominator tree information for a function. This information is built from the intermediate level information generated by the compiler high-level optimizer 204 and stored in CIDB 210.

### "Get application call graph":

This interface returns static call graph information for the entire application. This information is built from the intermediate level information generated by compiler 110 as part of its inter-procedural analysis phase. It is also possible to obtain call graph rooted at any specific function in the application source code.

### "GetIndirectCallTargets":

This interface returns, for each indirect call site (specified in source position information), the list of potential call recipients (or 'callees') associated with that call site.

### "Get application points to":

This interface returns a top down inter-procedural points to analysis on the control flow graph. This information is built from the intermediate level information generated by the compiler as part of its inter-procedural analysis phase.

### "Get mach res usage":

This interface returns machine resource usage of the application instructions. This information is built from the low level information generated by the compiler as part of its low level optimization 206 and stored in CIDB 210.

Below are described examples of tools 202 and how software development infrastructure 112 is used to simplify their development.

### Refactoring tool:

Refactoring is a series of behavior preserving transformations aimed at code reuse, improvement, etc. A number of the functions of the refactoring tool that can benefit from software development infrastructure 112 are as follows:
1. Determining impact of modifying or deleting a function entity: to do this the impact analysis tool needs to know the dependencies on this function. This information is generated by the compiler front-end 202 and forms a part of the high level information that is stored in CIDB 210.
2. Removing dead code: this function can retrieve information from CIDB 210 at function level, source file level or whole application level, and modify the source code accordingly.
3. Extracting a function for reuse: this requires the refactoring tool to extract the function definition and the minimal set of functions/variables that are called or accessed by the function, whether directly or indirectly. The refactoring tool can query CIDB 210 for function dependency list using "Get dependency list".

Without software development infrastructure 112, the refactoring tool developer would have to develop the parser and AST builder, then perform analysis on the AST. With software development infrastructure 112, the tool developer can utilize the compiler generated information stored in CIDB 210 using the appropriate interface from TII 212, and reduce the complexity and time required for developing, testing and maintaining a refactoring tool. A refactoring tool developed using the software development framework 112 extracts a given functionality (classes or functions) from a large application with its dependencies and creates a new compilable source code. This functionality can then be used as a part of a new application or a new module in the same application. Call Graph, dependency and source position information are retained from the compiler; the refactoring tool uses the TII 212 to traverse this information. The tool takes either a function name or a class name as input and produces a standalone, separately compilable C/C++ source file that contains the re-factored function or class.

### Indirect Call Tracker:

The Indirect Call Tracker (ICT) tool informs the user of the possible targets of an indirect function call statically. ICT is useful for impact analysis for cases when the call graph becomes inscrutable due to the presence of indirect function calls. ICT improves the accuracy of impact analysis by exposing the set of possible targets at the points where indirect calls are made. ICT reuses the compiler's indirect call analysis and obtains this information with software development infrastructure 112 using a "GetIndirectCallTargets" interface. (Compiler 110 performs indirect call analysis to improve the call graph and for devirtualization as part of the normal compilation process). This information is saved and fed to an impact analysis tool that uses this information to improve its accuracy of analysis.

### Intelligent Make (Imake) compilation tool:

In a program like Make, a compilation unit is recompiled if changes occur in either the compilation unit or the context on which the compilation unit depends. However, recompilations due to a change in a particular context may be redundant if that context change is not directly relevant to the compilation unit. Such redundant recompilations are due to the maintenance (in build systems like Make) of dependencies at translation unit level. Smart recompilation systems minimize the redundant recompilations by analyzing the source code to build the knowledge of the dependencies at granularities finer than the translation unit. Smart recompilation tools do extensive source code analysis to build up their knowledge of dependencies. This information is automatically generated by compiler 110 as part of its routine compilation process, and hence is available to tools 202 by querying CIDB 210. A minimal smart compilation tool checks for differences in the source files to determine which definitions have changed (such as with the 'diff' program), then queries CIDB 210 to identify those translation units that directly or indirectly use these definitions. Imake uses this information (obtained from CIDB 210) to modify the translation unit level dependency information in the make files which are in turn used by the make programs. In the absence of such information, if a function declaration in a header file is changed, all files that include the header file - whether those files use that particular declaration or not - are recompiled.

### Code Coverage Tools:

Code coverage tools are generally built using static source code instrumentation. Most existing source code coverage tools insert instrumentation at the beginning of each basic block. This incurs an overhead while running the program, so a sophisticated code coverage tool would be required to reduce the number of instrumentation points and hence instrumentation overhead. Consequently, many code coverage tools use the dominator tree information to reduce the number of instrumentation points. However, if a code coverage tool seeks to use the dominator tree information of the source to determine its instrumentation sites, it needs to analyze the source code and build the dominator tree. Software development infrastructure 112, however, allows the code coverage tool to retrieve the dominator tree information from CIDB 210 using the Get dominator tree interface of TII 212 and then - using this retrieved information - simply select the instrumentation sites.

### Performance analysis tools:

Static low level performance analysis tools are used to analyze an application and provide suggestions to the developer to improve performance. These static analysis tools allow the programmer to know which portions of the code might suffer from machine resource crunches. In order to perform such analysis, these tools must examine the application binary, build a resource usage model based on the underlying architecture, and report the usage of resources by different source constructs to the developer. This information is generated by the compiler low level optimizer (LLO) 206 while doing instruction scheduling and is retained in CIDB 210 as a part of the stored low level information. Hence, static low level performance analysis tools built using software development infrastructure 112 can use the Get mach res usage interface (of TII 212) to retrieve the instructions resource usage information from CIDB 210. The performance analysis tools can then use this information to report the usage of machine resources by different source level statements and the location of bottlenecks to the programmers.

FIG. 4 is a flow diagram 400 of a method of developing a software tool with system 100 of FIG. 1. In this example, the software tool being developed is for use with - or inclusion in - a particular software application. At step 402, therefore, the software application is compiled with compiler 110.

At step 404, CKI 206 capture compilation information generated by compiler 110 while compiling the software application. It will be appreciated that steps 402 and 404 typically occur at least partially concurrently (as may many adjacent steps of this method, such as steps 404 and 406).

At step 406, DII 208 receive the information provided by compiler 110 via CKI 206. At step 408, DII 208 process the compilation information into a compact form and forward it to CIDB 210. At step 410, the compilation information is stored in CIDB 210.

At step 412, a user - who is developing the software tool - uses TII 212 to query CIDB 210 and thereby requests a specified portion of the compilation information (which may be some or all of the compilation information) from the CIDB 210 for use in the creation of the tool. At step 414, CIDB 210 returns the requested information via TII 212. The user can then use the returned information to develop the tool.

### PROTOTYPE

A prototype of software development infrastructure 112 was implemented using the GCC 4.0.1 compiler and MySql 5.0 database. The prototype system populates CIDB 210 with symbol table, dependency and source position information from the compiler under a new flag. It also implements multiple TIIs for retrieving the information from CIDB 210. Details of some of the implemented TIIs are:
1) Get_callees: returns all the functions called by a function.
2) Get_globals_used: returns all the global variables used by a function.
3) Get_member _functions: return all the member functions of a class.
4) Get_function_spos: return the source position for a function.

In addition to these TIIs, in the prototype system information can also be retrieved using direct queries.

The prototype system was then used in the development of following tools.
1) Functionality extractor tool: This extracts a given functionality from a large application along with all its dependencies. The extracted source code is independently compilable and can be reused in other applications. This tool takes either a function or a class name as input and retrieves their dependency information from CIDB 210 using the Get_member_functions, Get_all_callees,Get_globals_used and other TIIs. It then determines the SPOS information for each dependency using the Get_*_spos TIIs and does the actual extraction using various unix tools. It took 1 Engineering Week (EW) to develop this tool using the TRICK framework. The effort involved in developing this tool standalone would be approximately 21 Engineering Months (EMs), comprising 15 EMs for the lexer and parser and 6 EMs for the Intermediate Representation.
2) Cross referencing tool (cscope): This tool helps in searching the source code for declarations, definitions, regular expressions, usages etc. The prototype system framework provides complete support for such queries. Hence, it took only 3 Engineering Days (EDs) to develop a non-TUI version of this tool. The effort involved in developing a standalone tool of equivalent accuracy from scratch would be approximately 24 EMs (comprsing 15 EMs for lexer and parser, 3 EMs for database, and 6EMs for User Interface and indexing).
3) Custom Program Complexity Tool: CIDB 210 was adapted to hold information about the number and nesting levels of loops in a function, number of conditional statements, etc.

### Conclusion

Thus, software development infrastructure 112 provides a mechanism whereby the information generated by compiler 110 concerning an application being compiled can be tracked, retained and reused by the development environment tools. Hence, the tools do not need to re-compute this required information. Software development infrastructure 112 includes standard querying interfaces to CIDB 210 (viz. TII 212) that can be used programmatically by any tool developer.

Furthermore, TII 212 can be extended by tool developers, if required, as no implementation of software development infrastructure 112 can foresee all possible interpretations and usages of information in the CIDB 210. This might arise where a developer needs information that is in CIDB 210 but finds that no TII is provided to extract that particular information or that a TII is provided but does not return the information in a desired form; the developer can write their own TII for extracting the desired information from CIDB 210 in the desired form. For example, in one embodiment CIDB 210 may store information about a call graph, and software development infrastructure 112 may have TIIs to extract dependency information, etc, from this call graph but lack a TII for extracting the entire call graph; in such a case the developer can write his or her own TII. For this reason, software development infrastructure 112 includes interfaces to the metadata information of CIDB 210 (i.e. information about the structure of the information in CIDB 210), for use by developers when their own TIIs.

Optionally, software development infrastructure 112 may include APIs or the like to allow tools to insert the results of their analysis into CIDB 210 so that it can be re-used by compiler 110 or other tools 202. It is expected, therefore, that software development infrastructure 112 will reduce the time required for performing standard compiler analyzes during tool development, hence allowing the developer to concentrate on the processing and presentation of the gathered information in a suitable manner to the end user.

Hence, software development infrastructure 112 simplifies tool development, and - as the system can be used for any programming language - tools 202 are de-linked from the idiosyncrasies of the specific programming language. This should allow software development infrastructure 112 to facilitate the sharing of information between various development and deployment tools.

In some embodiments the necessary software for controlling system 100 of FIG. 1 to perform the method 400 of FIG. 4 is provided on a data storage medium. It will be understood that, in this embodiment, the particular type of data storage medium may be selected according to needs or other requirements. For example, instead of a CD-ROM the data storage medium could be in the form of a magnetic medium, but any data storage medium will suffice.

It should also be noted that, although the embodiments described above all employ a compiler as the software product that generates the analysis information subsequently used in developing the tools, but other software product may also be used. For example, profiling tools use dominator information (i.e. which node in a graph dominates all others) and decide on instrumentation locations. This information could be the analysis information put into a database comparable to CIDB 210 and later used by, for example, a code coverage tool. In this example, therefore, the code coverage tool would not need to recompute the instrumentation locations.

The foregoing description of the exemplary embodiments is provided to enable any person skilled in the art to make or use the present invention. While the invention has been described with respect to particular illustrated embodiments, various modifications to these embodiments will readily be apparent to those skilled in the art, and the generic principles defined herein may be applied to other embodiments without departing from the spirit or scope of the invention. It is therefore desired that the present embodiments be considered in all respects as illustrative and not restrictive. Accordingly, the present invention is not intended to be limited to the embodiments described above but is to be accorded the widest scope consistent with the principles and novel features disclosed herein.

## Claims

1. A method of developing a software tool, comprising:
capturing analysis information generated by at least one software product and required for or useful in developing said software tool;
forwarding said analysis information from said software product to a database;
storing said analysis information in said database;
querying said database for at least a portion of said analysis information;
receiving said portion of said analysis information from said database in response to said querying; and
developing said software tool with or by reference to said portion of said analysis information.

2. A method as claimed in claim 1, wherein said software product comprises a compiler and said analysis information comprises compilation information generated by said compiler while compiling a software application.

3. A method as claimed in claim 1, further comprising querying said database with said software product via an interface adapted for facilitating querying of said database, and retrieving information from said database generated by said software product or by another software product.

4. A method as claimed in claim 1, further comprising processing said analysis information before storing said analysis information in said database.

5. A method as claimed in claim 4, including compressing or rendering more compact said analysis information before storing said analysis information in said database.

6. A method as claimed in claim 1, including updating said database with said analysis information incrementally.

7. A software development infrastructure product, comprising:
instructions in machine readable form and executable by a processor;
a database;
a first interface for controlling transmission of information from at least one software product to said database; and
a second interface for facilitating querying of said database;
wherein said first interface is adapted to receive analysis information generated by said software product and required for or useful in developing said software tool and to transmit said analysis information to said database, said database is adapted to store said analysis information received from said first interface, and said second interface is adapted for querying of said database for a specified portion of said analysis information, to retrieve said portion of said analysis information and to output said portion of said analysis information in a form suitable for use in developing said software tool.

8. A product as claimed in claim 7, wherein said software product comprises a compiler and said analysis information comprises compilation information generated by said compiler while compiling a software application.

9. A product as claimed in claim 7, wherein said analysis information is suitable for developing one or more software tools.

10. A product as claimed in claim 7, wherein said first interface comprises a first layer for capturing said analysis information generated by said software product during execution of said software product, and a second layer for receiving said analysis information from said first layer.

11. A product as claimed in claim 10, wherein said second layer is additionally adapted to process said analysis information into a compact form for transmission to or insertion into said database.

12. A product as claimed in claim 7, wherein said second interface comprises a plurality of interfaces adapted for respective software tools.

13. A software development system, comprising:
a processor;
a memory;
a database stored in said memory;
instructions in machine readable form stored in said memory and executable by said processor;
a first interface for controlling transmission of information from at least one software product to said database; and
a second interface for facilitating querying of said database;
wherein said first interface is adapted to receive analysis information generated by said software product and required for or useful in developing said software tool and to transmit said analysis information to said database, said database is adapted to store said analysis information received from said first interface, and said second interface is adapted for querying of said database for a specified portion of said analysis information, to retrieve said portion of said analysis information and to output said portion of said analysis information in a form suitable for use in developing said software tool.

14. A system as claimed in claim 13, wherein said software product comprises a compiler and said analysis information comprises compilation information generated by said compiler while compiling a software application.

15. A system as claimed in claim 13, wherein said database is queryable by said software product via said second interface.

16. A system as claimed in claim 13, wherein said first interface comprises a first layer for capturing said analysis information generated by said software product during execution of said software product, and a second layer for receiving said analysis information from said first layer.

17. A system as claimed in claim 13, wherein said system is a distributed system.

18. A system as claimed in claim 17, wherein said software product and said database are located remotely from a location at which a software tool is developed with said system.

19. A system as claimed in claim 13, wherein said database is adapted to be updated with said analysis information incrementally.

20. A method of developing a software tool, comprising:
dispatching a query to a database of analysis information generated by and received from at least one software product and required for or useful in developing said software tool, said query indicative of at least a portion of said analysis information;
receiving in response to said query said portion of said analysis information; and
developing said software tool with or by reference to said portion of said analysis information.

21. A data packet for developing a software tool, comprising:
information output by a database in response to a query, said information comprising at least a portion of analysis information stored in said database upon receipt from and generated by at least one software product and required for or useful in developing said software tool;
wherein said information is in a form suitable for use in developing said software tool.

22. A computer readable medium provided with program data that, when executed on a computing system, implements the method of any one of claims 1 to 6.
